# EUROPÄISCHE PATENTANMELDUNG

(11) **EP 3 270 200 A1**
(43) Veröffentlichungstag der Anmeldung: **17.01.2018**
(21) Anmeldenummer: 16179369.0
(22) Anmeldetag: 14.07.2016
(51) Int. Cl.: G02B 6/38, G02B 6/42

(54) **ADAPTERTEIL ZUR AUFNAHME EINES STECKERTEILS UND OPTISCHES MODUL**

(71) Anmelder: Diamond SA, 6616 Losone (CH)
(72) Erfinder: Coggi, Victor, 6616 Losone (CH); Fantini, Dionigi Sergio, 21030 Ghirla (IT)
(74) Vertreter: Hepp Wenger Ryffel AG

(57) **Zusammenfassung**

Adapterteil (1) zur Aufnahme eines Steckerteils umfassend ein Adaptergehäuse (10), eine Hülse (20), und ein Sicherungselement (30). Die Hülse (10) definiert mit einer Seitenwand (21) einen Aufnahmeraum (23). In diesem Aufnahmeraum (23) ist ein Steckerteil (40) durch eine Einstecköffnung (24) in einer Einsteckrichtung (2) einbringbar. In der Seitenwand (21) der Hülse (20) ist ein Rastmittel (22) zum Verrasten eines Verriegelungsmittels (41) des Steckerteils (40) angeordnet. Das Sicherungselement (30) ist relativ zur Hülse (20) beweglich zwischen einer ersten Position und einer zweiten Position gelagert, so dass in der ersten Position eine Bewegung des Rastmittels (22) zum Verrasten und/oder Lösen des Verriegelungsmittels (41) ermöglicht und in der zweiten Position blockiert ist. Die Hülse (20) ist im Adaptergehäuse (10) zwischen einer Freistellposition (11) und einer Arbeitsposition (12) verschiebbar gelagert.

## Beschreibung

Die vorliegende Erfindung betrifft ein Adapterteil zur Aufnahme eines Steckerteils und ein optisches Modul mit einem Adapterteil gemäss den Oberbegriffen der unabhängigen Ansprüche.

Aus dem Stand der Technik sind verschiedene Adapterteile, insbesondere für die faseroptische Verbindungstechnik bekannt. Die meisten Adapterteile sind für Verbindungssysteme bestehend aus Adapter und Steckverbinder ausgelegt, welche einfach von einem Benutzer betätigt werden können. Ausserdem sind diese Verbindungssysteme für eine Vielzahl von Steckzyklen ausgelegt und weisen eine hohe Komplexität auf.

EP 2 482 109 A2 offenbart ein Steckverbindungssystem mit einem Steckerteil und einem Buchsenteil. Dabei weist das Buchsenteil einen gefederten Steckerstift auf. Das Buchsengehäuse ist als Spannzange ausgebildet, dessen Aufweitung durch eine Sperrhülse blockiert werden kann.

Weiter bekannt sind optische Module, wie beispielsweise Transceiver-Module, welche ein elektrisches Signal in ein optisches Signal und umgekehrt wandeln. Hierzu sind die optischen Module einseitig mit einem Adapter ausgestatte, welcher ein Anschliessen eines Verbinder-Steckerteils erlaubt. Im optischen Modul muss der lichtführende Teil des Steckerteils präzise auf die aktive Komponente des Wandlers des optischen Moduls ausgerichtet werden. Üblicherweise werden hierzu Standardadapter von Verbindungssystemen verwendet, welche modulseitig mit einem Steckerstift mit Faserstummel bestückt sind. Das freie Ende des Faserstummels kann nun fabrikationsseitig genau auf die aktive Komponente ausgerichtet werden. Nachteilig ist die Verwendung von Steckerstift und Faserstummel, da diese aufwändig herzustellen sind und zusätzlich präzise montiert werden müssen.

EP 0 932 062 A1 zeigt eine ähnliche Konfiguration. Hier wird im Adapterteil modulseitig eine Baugruppe mit einer Laserdiode, einer Linse und einem Steckerstift präzise so aufeinander ausgerichtet und fixiert, dass diese Baugruppe in herkömmlicher Weise in den Adapter des Verbindungssystems eingesteckt werden kann. Diese Ausrichtung und Fixierung ist komplex und zeitintensiv. Die Ausrichtung des Steckerstifts der Baugruppe mit dem Steckerstift des Steckerteils erfolgt in bekannter Weise über eine geschlitzte Zentrierhülse. In dieser Zentrierhülse kann sich Schmutz ansammeln, welcher nur sehr schwer zu entfernen ist.

Es ist Aufgabe der Erfindung, die Nachteile des Standes der Technik zu überwinden. Insbesondere soll ein Adapterteil zur Verfügung gestellt werden, welches insbesondere in optischen Modulen verwendet werden kann und eine einfache, kostengünstige und präzise Fixierung und Ausrichtung eines Steckerteils erlaubt.

Diese Aufgabe wird durch die in den unabhängigen Patentansprüchen definierten Vorrichtungen gelöst. Weitere Ausführungsformen ergeben sich aus den abhängigen Patentansprüchen.

Ein erfindungsgemässes Adapterteil zur Aufnahme eines Steckerteils, insbesondere eines Steckerteils eines faseroptischen Systems umfasst ein Adaptergehäuse, eine Hülse und ein Sicherungselement. Die Hülse definiert dabei mit einer Seitenwand einen Aufnahmeraum. In diesem Aufnahmeraum kann ein Steckerteil durch eine Einstecköffnung in eine Einsteckrichtung einbringbar sein. Es versteht sich von selbst, dass die Einsteckrichtung in etwa parallel zur zentralen Achse der Hülsenbohrung verläuft. Ebenso verläuft die Einsteckrichtung in etwa parallel zu einer optischen Achse eines im Aufnahmeraum aufnehmbaren Steckerteils. In der Seitenwand der Hülse ist ein Rastmittel zum Verrasten eines Verrieglungsmittels des Steckerteils angeordnet. Das Sicherungselement ist dabei relativ zur Hülse beweglich zwischen einer ersten Position und einer zweiten Position gelagert. In der ersten Position erlaubt das Sicherungselement eine Bewegung des Rastmittels und somit ein Verrasten und/oder Lösen des Verriegelungsmittels des Steckerteils, während in der zweiten Position eine solche Bewegung des Verriegelungsmittels blockiert ist. Die Hülse ist im Adaptergehäuse, bevorzugt parallel zur Einsteckrichtung, zwischen einer Freistellposition und einer Arbeitsposition verschiebbar gelagert.

Durch eine verschiebbare Lagerung der Hülse kann beispielsweise sichergestellt werden, dass ein in das Adapterteil bzw. in die Hülse eingeführtes Steckerteil selbst nach dem Verrasten von Rastmittel und Verriegelungsmittel in Bezug auf ein beispielsweise optisches Element positioniert werden kann.

Die Seitenwand kann wenigstens einen Teilbereich aufweisen, der in etwa parallel zur Einsteckrichtung wenigstens einen Schlitz, bevorzugt zwei Schlitze, durch die Seitenwand aufweist. Ein solcher Schlitz erlaubt, dass der Innendurchmesser der Hülse zumindest im Teilbereich elastisch aufweitbar ist, um die Bewegung des Rastmittels für ein Verrasten und/oder Lösen des Verriegelungsmittels im Rastmittel zu ermöglichen oder zu vereinfachen. Die Bewegung des Verrieglungsmittels ist in dieser Art und Weise sehr einfach und zuverlässig realisierbar.

Die Verschiebung der Hülse kann mit einer Bewegung des Sicherungselements gekoppelt sein. Durch eine solche Kopplung wird eine besonders einfache und platzsparende Vorrichtung ermöglicht, welche das Verriegeln des Steckerteils mit der Verschiebung der Hülse und der entsprechenden Positionierung im Adapterteil verbindet. Beispielsweise kann sichergestellt werden, dass in der Arbeitsstellung das Steckerteil in der Hülse fixiert und verriegelt ist.

Die Hülse kann in der Freistellposition in Richtung zur Arbeitsposition vorgespannt sein. Durch eine solche Vorspannung, welche vorzugsweise durch eine Schraubenfeder erzielt wird, wird das Verschieben in die Arbeitsposition begünstigt.

Das Rastmittel kann in einer Seitenwand als wenigstens eine Aussparung ausgebildet sein. Entsprechend verfügt das Steckerteil über eine Rastnase als Verriegelungsmittel, welche aus einem Gehäuse des Steckerteils vorsteht. Selbstverständlich ist auch eine umgekehrte Anordnung - Rastnase an der Seitenwand und Aussparung im Steckerteil - denkbar.

Das Sicherungselement kann drehbar in einem Aufnahmebereich der Hülse angeordnet sein. Eine drehbare Anordnung des Sicherungselementes erlaubt wiederum eine einfache und insbesondere platzsparende Konstruktion.

Das Sicherungselement kann ringförmig mit einem ovalen, insbesondere elliptischen, Innenraum ausgestaltet sein, während eine Aussenfläche der Hülse im Aufnahmebereich im Wesentlichen kreiszylindrisch ausgestaltet ist. Entsprechend kann je nach Ausrichtung des Sicherungselementes in Bezug auf den wenigstens einen Schlitz der Hülse das Aufweiten der Hülse erlaubt, bzw. gesperrt werden.

Das Sicherungselement kann in Bezug auf eine Verschiebung parallel zur Einsteckrichtung im Aufnahmebereich fixiert sein. Durch eine Fixierung des Sicherungselementes im Aufnahmebereich der Hülse kann sichergestellt werden, dass das Sicherungselement nicht verloren geht. Ausserdem kann über das Sicherungselement eine Kraft zum Verschieben der Hülse eingeleitet werden.

Das Sicherungselement kann eine Kontaktkontur aufweisen, welche mit einem Kontaktelement des Adaptergehäuses derart zusammenwirkt, dass bei einer Positionierung des Sicherungselements in die erste Position die Hülse in die Freistellposition entgegen einer Vorspannung bewegbar ist und bei der Positionierung des Sicherungselementes in die zweite Position die Hülse in die Arbeitsposition bewegbar ist.

Das Kontaktelement kann ein vom Adaptergehäuse abstehender Nocken sein, welcher mit der Kontaktkontur im Sicherungselement in Form einer Einbuchtung zusammenwirkt. Eine solche Ausgestaltung mit Nocken und Einbuchtung ist einfach realisierbar und benötigt insbesondere lediglich einen geringen Platz. Es versteht sich von selbst, dass Nocken und Einbuchtung auch umgekehrt platziert werden können.

Das Adapterteil kann Anschlussmittel aufweisen, welche ein Anbringen des Adapterteils als Schnittstelle zum Verbinden eines Steckerteils an ein insbesondere optisches Modul ermöglichen. Solche Anschlussmittel können beispielsweise Positioniernocken oder -öffnungen sein, welche mit einem entsprechenden Gegenstück am optischen Modul korrespondieren und eine präzise Ausrichtung vereinfachen.

Die Hülse kann einen Anschlag zum Ausrichten auf einen opto-elektrischen Wandler aufweisen. Ein solcher Anschlag kann die Bewegung der Hülse in der Arbeitsstellung begrenzen und erlaubt eine präzise Positionierung gegenüber dem optischen Modul.

Ein weiterer Aspekt der vorliegenden Erfindung betrifft ein optisches Modul mit einem Adapterteil wie vorgängig beschrieben. Dabei sind die geschilderten Vorteile eins zu eins anwendbar.

Das optische Modul kann einen opto-elektrischen Wandler, insbesondere eine Transceiverschaltung aufweisen.

Das optische Signal kann von einem Steckerstift eines im Adapterteil aufgenommenen Steckerteils als freier Strahl über eine Linsenanordnung zu einem opto-elektrischen Wandler leitbar sein. Durch einen freien Strahlengang können Verluste an Übergangsflächen vermieden werden. Ausserdem kann sich in einer solchen Anordnung keine Verschmutzung auf Kontaktflächen ansammeln, welcher bei Benutzung angepresst an der Kontaktfläche wird.

Anhand von Figuren, welche lediglich Ausführungsbeispiele darstellen, wird die Erfindung im Folgenden näher erläutert. Es zeigen:
- Figur 1:: ein erfindungsgemässes Adapterteil in einer perspektivischen Ansicht,
- Figur 2:: das Adapterteil aus Figur 1 in einer perspektivischen Ansicht von unten,
- Figur 3:: ein teilweise aufgeschnittenes Adapterteil gemäss Figur 1 mit einem Stückverbinder kurz vor dessen Einsteckung,
- Figur 4:: ein teilweise aufgeschnittenes Adapterteil gemäss Figur 1, eingebaut in ein optisches Modul und mit eingestecktem Steckerteil,
- Figur 5:: das Adapterteil gemäss Figur 1 in einer teilweisen Explosionszeichnung,
- Figur 6:: ein aufgeschnittenes Adapterteil gemäss Figur 1 mit der Hülse in Freistellposition,
- Figur 7:: dieselbe Ansicht auf das Adapterteil gemäss Figur 5, jedoch mit der Hülse in der Arbeitsposition,
- Figur 8:: ein erfindungsgemässes optisches Modul mit einem Adapterteil und einem eingesteckten Steckerteil, und
- Figur 9:: eine Ansicht auf das teilweise aufgeschnittene optische Modul der Figur 7.

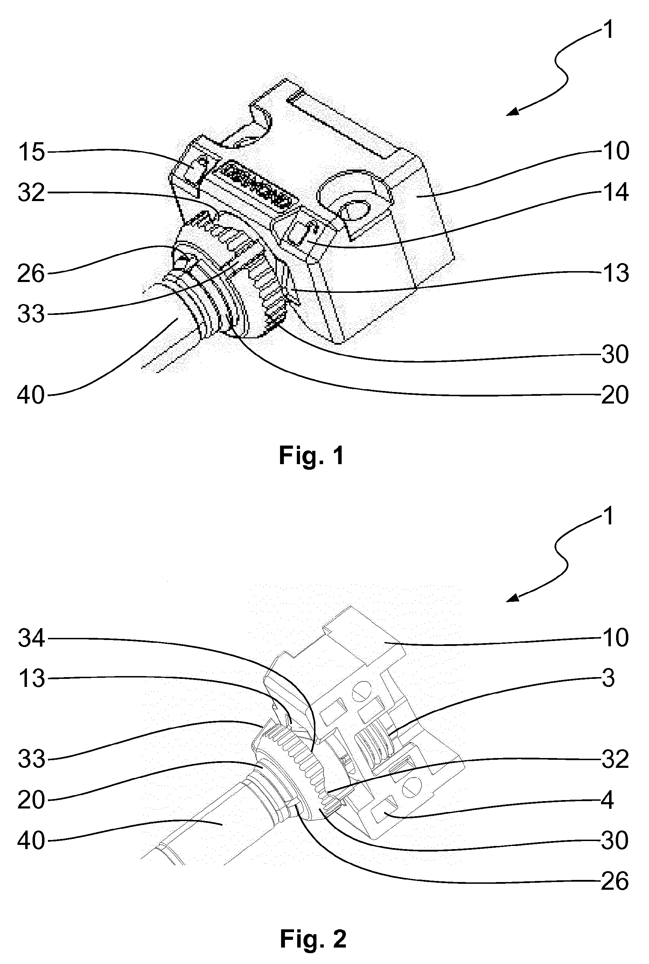

Die Figuren 1 und 2 zeigen je in einer perspektivischen Darstellung aus unterschiedlichen Richtungen ein erfindungsgemässes Adapterteil 1 mit einem Adaptergehäuse 10 und einem teilweise dargestellten Steckerteil 40. Das Adapterteil 1 weist auf der dem Betrachter zugewandten Seite ein Sicherungselement 30 auf, welches über einer Hülse 20, welche in Längsrichtung zwei Schlitze 26 aufweist, angeordnet ist. Das Sicherungselement 30 ist im Wesentlichen ringförmig ausgebildet und weist eine gerippte Oberfläche auf. In einem Bereich ist diese gerippte Oberfläche durch ein Anzeigeelement 33 unterbrochen. Das Sicherungselement 30 weist auf seinem dem Adaptergehäuse 10 zugewandten Seite eine Kontaktfläche 34 mit einer Einbuchtung 32 auf. Diese Kontaktfläche 34 stützt sich am Adaptergehäuse 10 an einem Nocken 13 ab, welcher von der dem Betrachter zugewandten Seite des Adaptergehäuses 10 vorsteht. Das Adapterteil 1 ist so dargestellt, dass es bereit ist, das Steckerteil 40 aufzunehmen oder ein Ausstecken dieses Steckerteils 40 zu ermöglichen. Entsprechend zeigt das Anzeigeelement 33 des Sicherungselementes 30 auf eine Freistellmarkierung 14 am Adaptergehäuse 10. Durch Drehen des Sicherungselementes 30 kann das Anzeigeelement 33 so verschoben werden, dass es auf eine Sperrmarkierung 15 am Adapterteil 1 zeigt. Entsprechend verschiebt sich mit einer solchen Drehung des Sicherungselementes 30 auch die Einbuchtung 32 des Sicherungselementes 30. Die Einbuchtung 32 wird somit über dem Nocken 13 des Adaptergehäuses platziert.

Nur in der Figur 2 sichtbar sind die Unterseite des Adaptergehäuses 10 mit Anschlussmittel 4 in Form von rechteckigen und runden Öffnungen auf, welche beispielsweise mit einem entsprechenden Positioniermittel eines Modules zusammenwirken können. Ausserdem kann auf der Unterseite des unten offenen Adaptergehäuses eine Schraubenfeder 3 erkannt werden, welche die Hülse 20 vorspannt.

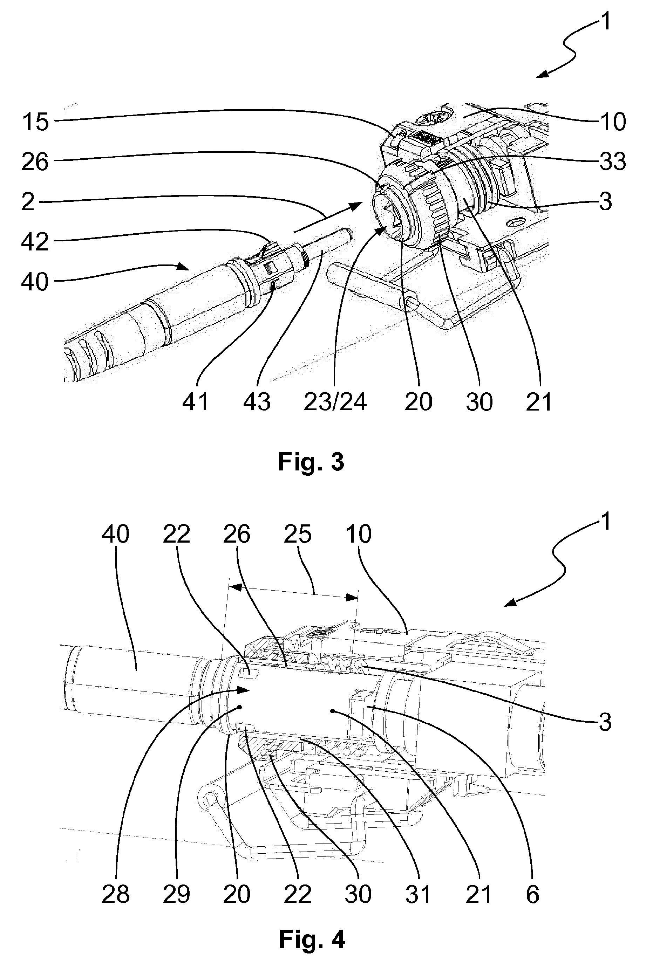

In der Figur 3 ist wiederum das erfindungsgemässe Adapterteil 1 aus den Figuren 1 und 2 dargestellt, wobei es diesmal seitlich teilweise aufgeschnitten ist. Ausserdem ist das Steckerteil 40 ausgesteckt, sodass ein Aufnahmeraum 23 und die entsprechende Einstecköffnung 24 des Adapterteils bzw. der Hülse 20 sichtbar sind. Wiederum zu erkennen ist, dass die Hülse 20 je einen Schlitz 26 auf einander gegenüberliegenden Seiten aufweist. Das Sicherungselement 30 ist auf der Seitenwand 21 der Hülse 20 wie vorgängig beschrieben drehbar gelagert. Eine Einsteckrichtung 2 verläuft in etwa parallel zu einer zentralen Achse der Hülsenbohrung sowie einer optischen Achse des Steckerteils 40 und ist in der Figur 3 als Pfeil dargestellt. Das Steckerteil 40 weist ein Gehäuse auf, welches einen Steckerstift 43 aufnimmt und auf seiner Gehäuseaussenseite eine Führungsnase 42 sowie Verriegelungsmittel 41 in Form von abstehenden Rastkanten aufweist. Wiederum zu erkennen ist das Anzeigeelement 33 des Sicherungselements 30, welches auf die weggeschnittene Freistellungsmarkierung 14 (vergleiche hierzu Figur 1) zeigt. Ausserdem kann die Sperrmarkierung 15 erkannt werden.

In der Figur 4 ist wiederum das Adapterteil gemäss den Figuren 1 bis 3 in einer teilweise aufgeschnittenen Version dargestellt. Gegenüber der Figur 3 sind auch das Sicherungselement 30 und das Federelement 3 aufgeschnitten. Deutlich zu erkennen ist die Hülse 20, welche beidseitig einen Schlitz 26 aufweist und an ihrem vorderen Ende Rastmittel 22 zeigt. Angedeutet ist die Länge des Schlitzes 26 über den Teilbereich 25 der Hülse 20. Dadurch, dass die Hülse 20 geschlitzt ist, lässt sich die Hülse zumindest in diesem Teilbereich 25 so ausdehnen, dass sich der Innendurchmesser der Hülse 20 aufweitet und ein Verriegelungsmittel 41 (siehe Figur 3) des Steckerteils 40 aus den Rastmitteln 22 der Hülse 20 entkoppeln kann. Die Führungsnase 42 (siehe Figur 3) wird vom Schlitz 26 aufgenommen. Die Hülse 20 ist auf ihrer Aussenfläche 29 zumindest in einem Aufnahmebereich 28 für das Sicherungselement 30 in etwa kreiszylindrisch ausgestaltet. Dadurch, dass das Sicherungselement jedoch einen ovalen oder elliptischen Innenraum 31 aufweist, kann je nach Positionierung des Sicherungselementes 30 das Aufweiten der Hülse 20 erlaubt oder verhindert werden. Entsprechend wird ein Ein-/Ausstecken des Steckerteils 40 ermöglicht oder blockiert. Das Federelement 3 des Adapterteils 1 liegt an seinem einen Ende an einem Anschlag 6 an, während sich das andere Ende an einer Kontur am Adaptergehäuse 10 abstützt. Entsprechend sorgt dieses Federelement 3 dafür, dass die Hülse 20 in Einsteckrichtung 2 (siehe Figur 3) vorgespannt ist.

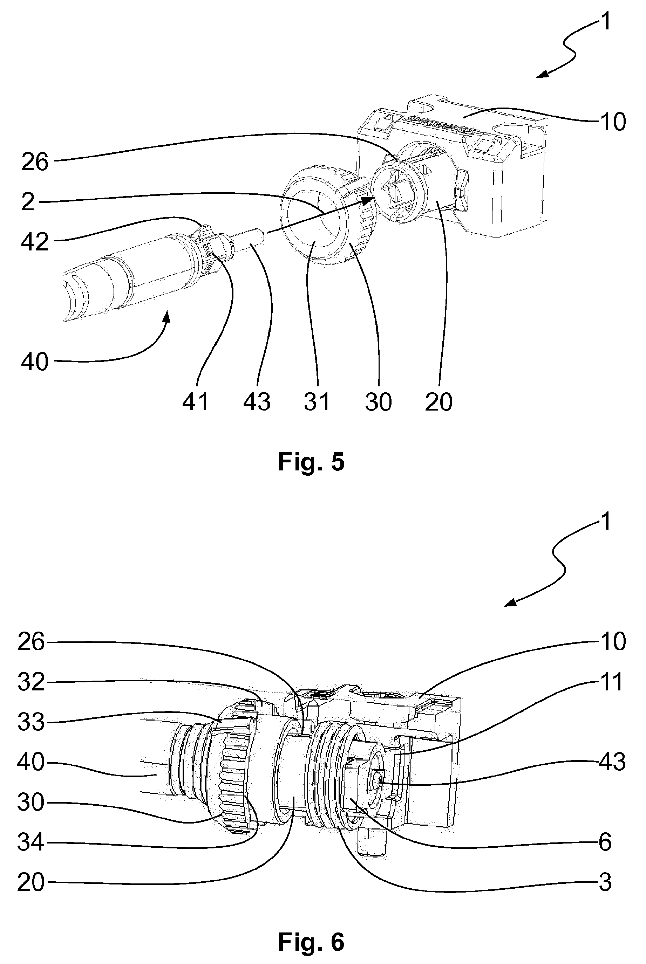

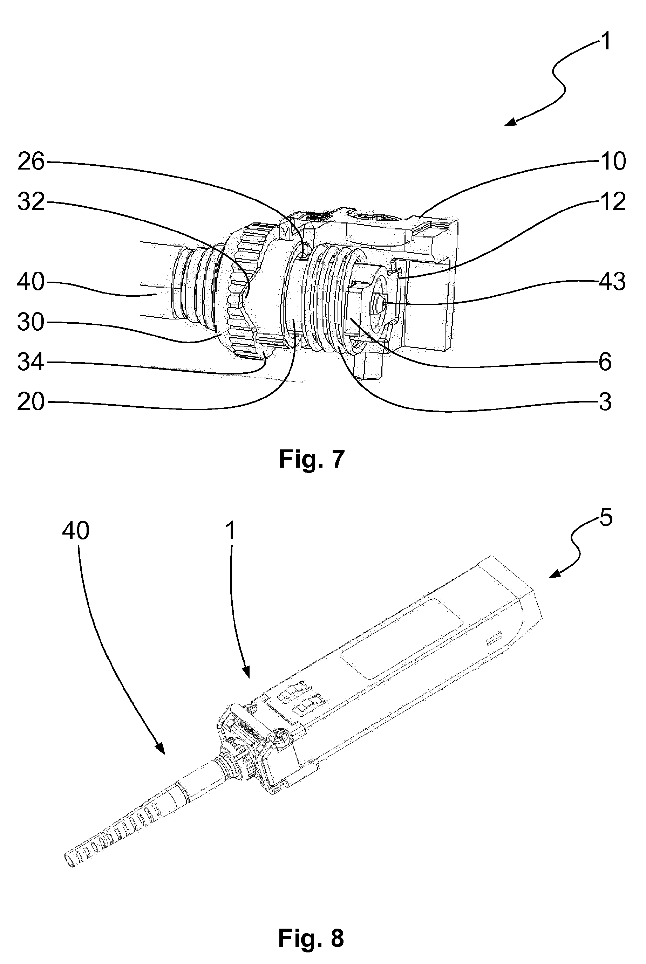

Die Figur 5 zeigt das das Adapterteil 1 gemäss Figur 1 in einer teilweisen Explosionszeichnung. Das Steckerteil 40 ist bereit, um in Einsteckrichtung 2 in die Hülse 20, welche aus dem Adaptergehäuse 10 hervorragt, eingesteckt zu werden. Selbstverständlich müsste vorab das Sicherungselement 30 auf der Hülse 20 montiert werden. Das Sicherungselement 30 ist von der Hülse 20 abgenommen, somit wird der ovale Innenraum 31 ersichtlich, welcher in der dargestellten Orientierung eine Ausdehnung der Hülse 20 erlaubt, während in einer um 90° gedrehten Orientierung (siehe Figur 7) eine solche Ausdehnung blockiert wird. Ebenfalls deutlich sichtbar wird der Schlitz 26 der Hülse 20. Ausserdem sind die Aufnahmen in der Hülse 20 ersichtlich, in welchen die Verriegelungsmittel 41 des Steckerteils 40 einrasten können. Die Rastnase 42 gewährleistet bei eingestecktem Steckerteil 40, dass die Verriegelungsmittel 41 auf die entsprechenden Aufnahmen der Hülse 20 ausgerichtet sind.

Die Figuren 6 und 7 zeigen wiederum eine Ansicht auf ein teilweise aufgeschnittenes Adapterteil 1 wie vorgängig beschrieben, wobei die Figur 5 die Hülse 20 in Freistellposition 11 und die Figur 6 die Hülse 20 in Arbeitsposition 12 zeigen. In der Darstellung gemäss Figur 5 befindet sich das Sicherungselement 30 mit seinem Anzeigeelement 33 ausgerichtet auf die Freistellmarkierung 14 (siehe Figur 1). Entsprechend erlaubt der elliptische Innenraum des Sicherungselementes 30 ein Ausweiten der geschlitzten Hülse 20. Weiter ersichtlich ist am Sicherungselement 30 die Kontaktfläche 34 mit ihrer Einbuchtung 32, welche mit dem nicht dargestellten Nocken 13 (siehe Figur 1) zusammenwirken. Der Anschlag 6 dient der einseitigen Begrenzung des Federelementes 3, welches die Hülse 20 in Einsteckrichtung 2 (siehe Figur 3) vorspannt. Die Hülse 20 befindet sich in der Freistellposition 11. Dies ist erkennbar, da der Anschlag 6 gegenüber einer Kontur des Adaptergehäuses 10 zurückversetzt ist. dieser Anschlag 6 dient jedoch auch der Begrenzung einer Bewegung der Hülse in Einsteckrichtung und kann an einem Element eines optischen Moduls anschlagen.

In der Figur 7 befindet sich die Hülse 20 in der Arbeitsposition 12. Entsprechend befindet sich das Anschlagmittel 6 auf derselben Ebene wie die entsprechende Kontur des Adaptergehäuses 10. Die Bewegung zwischen Freistellposition 11 gemäss Figur 6 und Arbeitsposition 12 gemäss Figur 7 wird ermöglicht durch das Federelement 3, welches die Hülse 20 in Richtung zur Arbeitsposition 12 vorspannt. Um diese Bewegung jedoch zu erlauben, muss das Sicherungselement 30 auf der Hülse 20 so gedreht werden, dass die Einbuchtung 32 mit der Nocke 13 (siehe Figur 1) ausgerichtet ist und sich entsprechend die Kombination aus Sicherungselement 30 und Hülse 20 zur Arbeitsposition bewegen kann. Das Steckerteil 40, welches in der Hülse 20 eingesteckt ist, wird bei dieser Bewegung ebenfalls mitgenommen, sodass sich die Endfläche des Steckerstifts 43 ebenfalls in die Arbeitsposition 12 bewegt.

In der Figur 8 ist ein erfindungsgemässes optisches Modul 5 in einer perspektivischen Ansicht dargestellt. Deutlich zu erkennen ist das Adapterteil 1, welches ein Steckerteil 40 aufnimmt.

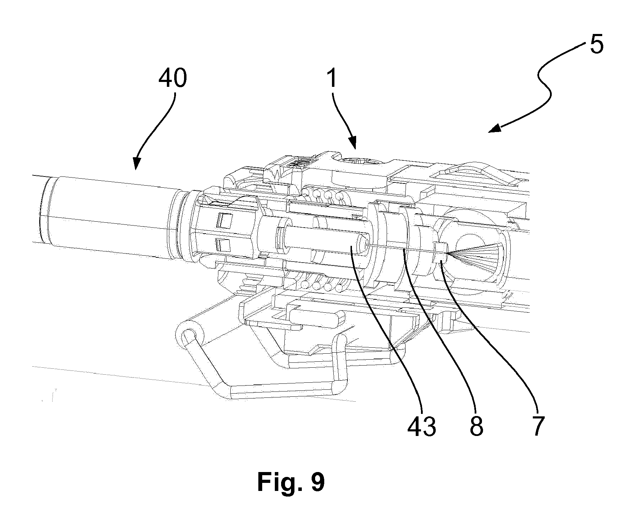

In der Figur 9 ist in einer perspektivischen Ansicht der Bereich des Adapterteils 1 teilweise aufgeschnitten dargestellt, wobei ein Strahlengang 8 eines Lichtwellenleiters ausgehend von einem Steckerstift 43 des Steckerteils 40 zu einem opto-elektrischen Wandler dargestellt ist. Der Lichtstrahl wird als freier Strahl über eine Linsenanordnung 7 dem opto-elektrischen Wandler zugeführt. Selbstverständlich wäre es auch denkbar, den Lichtstrahl in einem anderen lichtleitenden Medium, z.B. Faserstummel, Glasspacer sowie mittels anderen Technologien wie beispielsweise Strahlaufweitung mit Gradientenlinsen, Kugellinsen oder Kollimatoren, dem opto-elektrischen Wandler zuzuführen. Die einzelnen Merkmale des Adapterteils 1 und des Steckerteils 40 wurden bereits früher diskutiert, sodass sich eine Wiederholung hier erübrigt.

## Patentansprüche

1. Adapterteil (1) zur Aufnahme eines Steckerteils, insbesondere eines Steckerteils eines faseroptischen Systems, umfassend ein Adaptergehäuse (10), eine Hülse (20), und ein Sicherungselement (30),
wobei die Hülse (10) mit einer Seitenwand (21) einen Aufnahmeraum (23) definiert und in diesem Aufnahmeraum (23) ein Steckerteil (40) durch eine Einstecköffnung (24) in einer Einsteckrichtung (2) einbringbar ist,
wobei in der Seitenwand (21) der Hülse (20) ein Rastmittel (22) zum Verrasten eines Verriegelungsmittels (41) des Steckerteils (40) angeordnet ist und das Sicherungselement (30) derart relativ zur Hülse (20) beweglich zwischen einer ersten Position und einer zweiten Position gelagert ist, dass in der ersten Position eine Bewegung des Rastmittels (22) zum Verrasten und/oder Lösen des Verriegelungsmittels (41) des Steckerteils (40) ermöglicht und in der zweiten Position blockiert ist,
**dadurch gekennzeichnet, dass** die Hülse (20) im Adaptergehäuse (10) zwischen einer Freistellposition (11) und einer Arbeitsposition (12) verschiebbar gelagert ist.

2. Adapterteil (1) nach Anspruch 1, **dadurch gekennzeichnet, dass** die Seitenwand (21) wenigstens in einem Teilbereich (25) in etwa parallel zur Einsteckrichtung (2) einen Schlitz (26) aufweist, sodass ein Innendurchmesser (27) im Teilbereich (25) elastisch aufweitbar ist, um die Bewegung des Rastmittels (22) zum Verrasten und/oder Lösen des Verriegelungsmittels (41) zu ermöglichen.

3. Adapterteil (1) nach Anspruch 1, **dadurch gekennzeichnet, dass** eine Verschiebung der Hülse (20) mit einer Bewegung des Sicherungselements (30) gekoppelt ist.

4. Adapterteil (1) nach Anspruch 1 oder 2, **dadurch gekennzeichnet, dass** die Hülse (20) in der Freistellposition (11) in Richtung zur Arbeitsposition (12) vorgespannt ist.

5. Adapterteil (1) nach einem der Ansprüche 1 bis 3, **dadurch gekennzeichnet, dass** das Rastmittel (22) in der Seitenwand (21) als wenigstens eine Aussparung oder als wenigstens eine nach innen gerichtete Nase ausgebildet ist.

6. Adapterteil (1) nach einem der Ansprüche 1 bis 4, **dadurch gekennzeichnet, dass** das Sicherungselement (30) drehbar in einem Aufnahmebereich (28) der Hülse (20) angeordnet ist.

7. Adapterteil (1) nach Anspruch 5, **dadurch gekennzeichnet, dass** das Sicherungselement (30) ringförmig mit einem ovalen, insbesondere elliptischen, Innenraum (31) ausgestaltet ist und der Aufnahmebereich (28) der Hülse (20) eine im Wesentlichen kreiszylindrische Aussenfläche (29) aufweist.

8. Adapterteil (1) nach Anspruch 5 oder 6, **dadurch gekennzeichnet, dass** das Sicherungselement (30) in Bezug auf eine Verschiebung parallel zur Einsteckrichtung (2) im Aufnahmebereich (28) fixiert ist.

9. Adapterteil (1) nach einem der Ansprüche 2 bis 7, **dadurch gekennzeichnet, dass** das Sicherungselement (30) eine Kontaktkontur aufweist, welche mit einem Kontaktelement des Adaptergehäuses (10) derart zusammenwirkt, dass bei einer Positionierung des Sicherungselements (30) in die ersten Position die Hülse (20) in die Freistellposition (11) entgegen einer Vorspannung bewegbar ist und bei der Positionierung des Sicherungselementes (30) in die zweiten Position die Hülse (20) in die Arbeitsposition (12) bewegbar ist.

10. Adapterteil (1) nach Anspruch 8, **dadurch gekennzeichnet, dass** das Kontaktelement ein vom Adaptergehäuse (10) abstehender Nocken (13) ist, welcher mit der Kontaktkontur in Form einer Einbuchtung (32) im Sicherungselement (30) zusammenwirkt.

11. Adapterteil (1) nach einem der Ansprüche 1 bis 9, **dadurch gekennzeichnet, dass** das Adapterteil (1) Anschlussmittel (4) aufweist, welche ein Anbringen des Adapterteils (1) als Schnittstelle zum Verbinden eines Steckerteils (40) an ein insbesondere optisches Modul (5) ermöglichen.

12. Adapterteil (1) nach einem der Ansprüche 1 bis 10, **dadurch gekennzeichnet, dass** die Hülse (20) einen Anschlag (6) zum Ausrichten auf einen opto-elektrischen Wandler aufweiset

13. Optisches Modul (5) mit einem Adapterteil (1) nach einem der Ansprüche 1 bis 11

14. Optisches Modul (5) nach Anspruch 12, **dadurch gekennzeichnet, dass** das optische Modul (5) einen opto-elektrischen Wandler, insbesondere eine Transceiverschaltung aufweist.

15. Optisches Modul (5) nach Anspruch 13, **dadurch gekennzeichnet, dass** ein optisches Signal von einem Steckerstift (43) eines im Adapterteil (1) aufgenommenen Steckerteils (40) als freier Strahl über eine Linsenanordnung (7) zu einem opto-elektrischen Wandler leitbar ist.
